# EUROPEAN PATENT SPECIFICATION

(11) **EP 4 177 693 B1**
(45) Date of publication and mention of the grant of the patent: **15.10.2025**
(21) Application number: 20757933.5
(22) Date of filing: 02.07.2020
(51) Int. Cl.: G05D 1/00

(54) **METHOD AND DEVICE FOR OBTAINING REPRESENTATION MODELS OF STRUCTURAL ELEMENTS**
VERFAHREN UND VORRICHTUNG ZUR ERMITTLUNG VON REPRÄSENTATIONSMODELLEN VON STRUKTURELEMENTEN
MÉTHODE ET DISPOSITIF POUR OBTENIR DES MODÈLES DE REPRÉSENTATION D'ÉLÉMENTS STRUCTURAUX

(43) Date of publication of application: 10.05.2023
(73) Proprietor: BIMERTEK, S.L., 20720 Azkoitia Guipuzcoa (ES)
(72) Inventor: LÓPEZ IRIONDO, Jon, 20720 Azkoitia, Gipuzkoa (ES); CARLAVILLA MATILLA, César, 20720 Azkoitia, Gipuzkoa (ES); WALIÑO NIEVES, Sebastián, 20720 Azkoitia, Gipuzkoa (ES); PAGOAGA BENITO, Ricardo, 20720 Azkoitia, Gipuzkoa (ES); CORVO MARÍN, Raquel, 20720 Azkoitia, Gipuzkoa (ES); ARREGUI ZUBIZARRETA, Nagore, 20720 Azkoitia, Gipuzkoa (ES); SASIAIN SESMA, Bingen, 20720 Azkoitia, Gipuzkoa (ES); IÑARRAIRAEGUI AGUIRRE, Ander, 20720 Azkoitia, Gipuzkoa (ES); BAYARRI CAYÓN, Vicente, 20720 Azkoitia, Gipuzkoa (ES)
(74) Representative: ABG Intellectual Property Law, S.L.
(86) International application number: PCT/ES2020/070423
(87) International publication number: WO 2022/003215

(56) References cited:
- WO-A1-2019/100699
- US-A1- 2010 045 678
- US-A1- 2012 120 072
- US-A1- 2019 196 467

## Description

### OBJECT OF THE INVENTION

The present invention relates to a method and device for obtaining representation models of structural elements placed on a surface. The method uses a device for obtaining different measurements which allow generating representation models.

The method is characterized by a set of steps comprising: placing a vehicle on the surface to be represented, determining the position and orientation of the vehicle, and taking different detection measurements by means of moving the vehicle to generate the representation model of the environment comprising at least different regions indicating explored areas, unexplored areas, and detected objects.

### BACKGROUND OF THE INVENTION

One of the fields of the art that has been the most intensely developed relates to the development of devices with sensors for collecting data concerning the different characteristics of a specific physical environment.

There are mobile devices that can move in a physical environment and are intended for activities relating to surface cleaning, work element manufacture by means of 3D printing processes, automation of specific processes typical of construction, etc.

Moreover, there are methods for establishing specific navigation modes of a device in a specific environment. The method defines a navigation region by means of a scalar function associated with the navigation cost. This mode of spatial representation requires modifying the cost function every time a new object is detected so as to establish new paths that minimize costs between different points of the environment.

Devices that can move in an environment and map out certain characteristics of the environment or capture big data generally, without paying any attention to the position or shape thereof, are also known.

Document WO 2019/100699 A1 describes a system and a method to improve the scanning time of a space. The system includes a scanning device that receives 2-dimensional navigation information, wherein the navigation information includes movement areas. The scanning device is configured to be navigated through the movement areas identified. Further, the data capturing modules scans the surrounding environment. The surrounding environment information is then combined with the 2-dimensional navigation information to generate a 3-dimensional scanned object or 3D Polygon or 3D Mesh in real time.

Document US 2019/0196467 A1 describes a system and method for drone path planning. Particularly, this document discloses a system for drone path planning for a drone, the system to perform the operations: storing a current location of the drone as a current waypoint in a set of waypoints, the set of waypoints to include the current waypoint and a previous waypoint; detecting a current set of frontiers from the current location; storing the current set of frontiers in a list of active goals, the current set of frontiers associated with the current location; determining whether a target is discovered in the current set of frontiers; exploring the current set of frontiers to attempt to find the target; and exploring a previous set of frontiers from the active list of goals, when exploring the current set of frontiers does not discover the target, the previous set of frontiers associated with the previous waypoint.

The devices known in the state of the art do not emphasize the reliability of the captured data and the propagation of errors. Often, the characteristics of the surfaces demarcating the space and the exact positioning thereof on the surface to be explored must be known to prevent any error or problem that may arise, particularly in some fields such as in the field of construction.

In construction, for example, accurate information about the different objects and surfaces that are actually located in the work site environment must be obtained to enable establishing the work site perimeter and indicating the contours in which the foundation must be placed.

The following invention proposes a solution to the preceding problems by means of a method and device capable of plotting out the site based on a map which is accurately generated through different detection means, and the processing of this information that is obtained.

### DESCRIPTION OF THE INVENTION

The present invention proposes a solution by means of a method for generating a representation model of structural elements placed on a surface according to claim 1 and a device for generating the representation model of structural elements according to claim 13. The dependent claims define preferred embodiments of the invention.

A first inventive aspect provides *a method for generating a representation model of structural elements placed on a surface, wherein the method generates the representation model by means of a device comprising:*
- *a vehicle with drive means and control means adapted for commanding the drive means, wherein said vehicle is adapted for moving over the surface;*
- *a central processing unit and a storage unit in communication with the central processing unit, wherein the central processing unit is at least in communication with the control means;*
- *a first object detection module configured for providing distance measurements and measurement direction with respect to objects at least at an angle in an essentially horizontal plane;*
- *wherein the central processing unit is configured for:*
   *acting on the control means, determining the movement of the vehicle;*
   *receiving detection measurement data from the first detection module;*
   *processing the received data and carrying out reading and writing operations in the storage unit.*

Representation model will be interpreted as any model constructed from specific data structures comprising the measurements detected by at least one detection module. The representation model of the method allows representing information about any type of construction element, structural elements, and non-structural elements such as furniture or architectural elements.

The method of the invention generates a representation model by means of using a device comprising, on one hand, a vehicle that can be moved and oriented on the surface by drive means and control means acting on the drive means.

Throughout this document, "drive means" will be understood as the means generating the movement of the vehicle on the surface and "control means" as the means acting on the drive means, controlling the movement and rotation of the vehicle.

The device of the invention further comprises a central processing unit at least in communication with the control means and with a storage unit. The central processing unit can be placed in the vehicle itself or outside the work site environment and is configured for determining the movement of the vehicle by acting on the control means, for receiving the measurements detected by the detection modules, processing said data, and acting on the storage unit.

The device further comprises a detection module. Throughout the document, "first detection module" will be understood as the set of elements configured for providing distance measurements and measurement direction with respect to objects in an essentially longitudinal plane. Preferably, the detection module is comprised in the vehicle itself to provide different detection measurement data as the vehicle moves.

*Wherein the method comprises the following steps:*
*a) positioning the vehicle on the surface;*
   *and, by means of the central processing unit:*
*b) instantiating an at least two-dimensional representation model for representing the surface comprising an image with coordinate points of the surface, the image being adapted for representing at least:*
   - *a first region corresponding to points of the surface which have not been explored, if there are any,*
   - *a second region corresponding to points of the surface which have been explored by the first module, if there are any, and*
   - *a third region corresponding to points in which there is a captured object, if there are any;*
   *wherein initially the image only contains a first region;*
*c) determining the position and orientation of the vehicle.*

At the beginning, a coordinate system is established in the exploration space. The vehicle must first be positioned on the surface to be explored by initiating the position coordinates of the vehicle together with its orientation, which will allow knowing the exact position and orientation of the vehicle on the surface at all times.

The central processing unit is in charge of instantiating a representation model, initially two-dimensional, for representing the surface on which the vehicle moves. The representation model comprises an image representing different regions. At first, the image is initiated with a single region, the first region, in which all the points of the surface which have not been explored are represented. At the moment of positioning the vehicle, no exploration has been performed and the model contains the image with the first region alone.

This image is adapted for representing a second region showing the points of the surface which have been explored by the detection module and for representing a third region showing those points in which the detection module has detected the existence of an object.

The method additionally comprises:
*d) iteratively carrying out the following sub-steps:*
   *taking a plurality of detection measurements with the first detection module, determining the coordinates of each point obtained in the measurement, and storing at least said coordinates of each point in the image;*
   *determining the region of the surface which has already been explored and storing it in the image;*
   *determining the region of the surface as the region in which an object has been located and storing it in the image;*
   *moving the vehicle a predetermined distance over a region which corresponds, in the image, to the second region, preventing collision with a structural element through the detection measurements with the first detection module;*
   *as long as a stop criterion is not met;*
*e) providing a representation model at least comprising the image; and*
wherein the central processing unit is further adapted for exploring sub-domains of the space represented by the representation model and reducing the number of points stored in said sub-domain when the density of points exceeds a specific predetermined threshold value.

The method carries out a series of sub-steps iteratively to provide the representation model comprising the image with the different regions. At first, the image only has a first region, and the rest of the regions in the image are gradually determined as the vehicle moves and the first detection module provides detection measurements of the objects.

The first detection module takes a series of detection measurements depending on the vehicle position, the coordinates of each of the points which are obtained in the detection measurements are determined, and said points are stored in the coordinates of the corresponding image. Once said measurements have been taken, the regions which have been explored by the first detection module and that region with the points in which an object has been detected are determined in the image.

As a result of the drive means, the vehicle then moves a specific distance which allows knowing the exact position of the vehicle after the movement. The vehicle moves said specific distance to the second region represented in the image, i.e., to the part that has been explored by the detection module and in which the first detection module has not detected the presence of an object. The first detection module thereby allows preventing any possible collision with the objects on the exploration surface.

These sub-steps are carried out iteratively until a stop criterion is met. "Stop criterion" will be understood as any situation which prevents the vehicle from continuing with the detection measurements or that situation in which the detection module has completed surface recognition. For example, if the vehicle is in a region that has been explored and is blocked by elements detected by the detection module, such that the vehicle has finished exploring the area and cannot move over the objects demarcating the region, or if the vehicle is in a region surrounded by elements that have been detected and by inaccessible areas that cannot be explored, as would be the case of places where there would be a chasm.

In a particular embodiment, *the device further comprises a second object detection module configured for providing distance measurements and distance measurement direction with respect to points of the surface of objects at least comprised in a capture volume and,*
*wherein the central processing unit is furthermore configured for receiving detection measurement data from the second detection module.*

In this particular embodiment, the device using the method for determining the representation model of the elements placed on the surface comprises a second detection module. Throughout the document, "second detection module" will be understood as the set of elements configured for providing distance measurements with respect to points of the surface of objects that are within the capture volume of the detection module.

According to a non-claimed embodiment, *the representation model further comprises spatial points placed on the surface which correspond to the outer surface of the structural elements placed on said surface captured by the second detection module.*

In this example, the second detection module takes distance measurements with respect to points of the outer surface of construction elements that are on the exploration surface and said measurements are incorporated in the representation model, now preferably being a three-dimensional representation model representing the spatial points detected within the capture volume.

*In a particular embodiment, the central processing unit is configured for:*
*i. iteratively taking detection measurements or determining the second or third region of the iterative sub-steps of the method of the invention based on the detection measurements with the second detection module, and*
*ii. storing them in the representation model.*

According to this embodiment, the central processing unit is also configured for iteratively determining the regions of the representation model representing the explored surfaces and those points in which the second detection module has detected an object. In this embodiment, the representation model comprises the data of the measurements taken by both the first detection module and the second detection module, adding more information about the surface of the detected objects.

In a non-claimed embodiment, *the central processing unit is configured for correcting the position and orientation of the vehicle based on the data from:*
- *the first detection module, or*
- *the second detection module, or*
- *the representation model, or*
- *a compass installed in the vehicle, or*
- *a GNSS (Global Navigation Satellite System) device installed in the vehicle, or*
- *a combination of two or more of the foregoing.*

Knowing the exact position of the robot is fundamental to accurately provide the representation model. The central processing unit may use different data to correct or adjust the position and orientation of the vehicle. The CPU could use the measurement data of the first or second detection module, for example, if the vehicle has taken detection measurements in one position and knows the situation of a specific object, in the event that the vehicle must but fails to move one meter due to some problem, the object is detected in the same preceding position when taking new detection measurements and it can be observed that the vehicle has not been moved said meter and the position can therefore be corrected.

The vehicle may comprise some sensors which allow knowing its position and orientation, and can also be used in adjusting the coordinates of the vehicle. Some of these sensors may be a compass or a GNSS device, among others.

In a particular example, *the device further comprises a third detection module configured for providing measurements of the properties of a specific point of the surface on which the vehicle is located, and*
*wherein the central processing unit is furthermore configured for receiving detection measurement data from the third detection module.*

The device may comprise a third detection module providing measurements of the properties of a certain specific point of the surface on which the vehicle is located. "Third detection module" will be understood as any type of sensor or sensors configured for measuring a specific property of the point where the vehicle is located on the surface.

In a particular non-claimed example, *the image of the representation model further comprises the properties measured at the different points of the surface which have been captured by the detection module and in which the vehicle has been positioned.*

In this example, the data of the properties measured by the third detection module are stored in the image of the representation model, incorporating more information in those points of the surface in which the vehicle has been positioned and the third detection module has captured measurements of the properties thereof.

In a particular example, *the device further comprises a fourth detection module configured for providing measurements of the properties of the environment together with the measurement distance and direction with respect to the points of the environment comprised in a capture volume, and*
*wherein the central processing unit is furthermore configured for receiving detection measurement data from the fourth detection module.*

The device may comprise a fourth detection module which, instead of providing a value for the position of the vehicle like the third detection module, provides measurements of the properties together with the distance to the spatial points of the surfaces that are part of the capture volume. "Fourth detection module" will be understood as any type of sensor or sensors configured for measuring a specific property at different points of the capture space in which the vehicle is located.

In a particular non-claimed example, *the representation model further comprises the properties of the spatial points comprised in the volume captured by the fourth detection module.*

In this example, the data of the properties measured by the fourth detection module are additionally stored in the representation model, incorporating more information in those spatial points of the surfaces comprised in the capture volume of the fourth detection module.

In a particular non-claimed example,
- *the measurements of the first module are points projected on the surface, and*
- *wherein a density of points, determined based on the measurements of the first module, higher than a pre-established threshold value is represented in the image as a line representing at least a portion of the horizontal projection of a structural element on the surface.*

In this example, when the first detection module detects a construction element on the exploration surface, the point in which the presence of an element has been detected is projected as a point on the surface which is represented in the image of the representation model.

Therefore, when the first detection module takes a series of detection measurements detecting the presence of an element, the detections are gradually represented as a series of consecutive points. When the density of said set of points, which are representing the presence of a construction element, is higher than a predetermined threshold, the construction element detected by the detection module is represented as a line in the image of the representation model. This line represents the projection of the construction element on the surface.

Therefore, when the first detection module detects the presence of a structural element on the surface, this structural element is represented with lines in the image of the representation model which gradually demarcates the regions over which the vehicle can move to keep taking detection measurements.

In a particular non-claimed embodiment, *the stop criterion of the iterative method requires the vehicle to perform movements until a closed line demarcating an area containing therein the position coordinates of the vehicle is established in the image.*

In this embodiment, the stop criterion is met when the vehicle is within a region demarcated by a line defining a closed area in the image of the representation model. "Line" will be understood as the accumulation of a set of points connected to one another and distributed along a straight or curved line.

Detection measurements are taken iteratively until the elements around the vehicle which prevent its movement have been detected, that is, for example until the vehicle is located between structural elements preventing it from moving beyond said region, or until the vehicle has finished recognizing the surface demarcated by structural elements such as walls.

In a particular non-claimed embodiment, *the stop criterion of the iterative method requires the region first to be absent.*

In this embodiment, the stop criterion is met when the vehicle has moved over the entire surface and already performed a complete exploration, i.e., when the first region of the image of the representation model showing the regions yet to be explored, is absent.

In a particular non-claimed example, *the movement of the vehicle is in accordance with a pre-established initial path.*

In a particular example, *the movement of the vehicle is carried out with section-wise advancements, wherein in each advancement the vehicle is oriented towards a region of the unexplored area in the image.*

In this example, the vehicle moves towards the regions of the surface which have not been explored, i.e., the vehicle moves advancing through the first region of the image of the representation model.

In this particular example, *when reading a measurement of the first detection module that is below a predetermined threshold value in the event of the presence of a structural element, the path is modified to avoid said structural element.*

In this example, advantageously a distance limit above which the vehicle cannot approach a structural element is determined so as to prevent collisions, the path followed by the movement of the vehicle is modified when the movement involves approaching a structural element which the first detection module detects as being below the established limit. This limit allows the vehicle to move closer to a structural element and rotate without colliding with it.

In a particular non-claimed example, *the path is modified, causing a predetermined change in the orientation of the vehicle.*

In a particular non-claimed example, *the plurality of detection measurements are taken with the first object detection module, the second detection module, or both, causing the rotation of the vehicle according to a complete turn.*

In this example, the detection modules of the vehicle gradually take detection measurements when the vehicle gradually rotates, making a complete turn. Detection measurements of the entire surrounding environment in which the vehicle is located are thereby taken by means of the rotation of the vehicle, where the direction in which a structural element is located or the directions in which no elements are detected can be determined and the vehicle can move to continue the exploration.

In a particular non-claimed example, *the second detection module has a horizontal angle of capture of up to 360º.*

In this example, the second detection module allows performing, in an instant, a horizontal capture of up to 360º to detect any element around the vehicle in that position without the vehicle having to perform any rotation.

In a particular non-claimed example, *the plurality of detection measurements are taken in a circular sector, limiting the measurement in a pre-established range of distances [rₘᵢₙ, rₘₐₓ] of the vehicle.*

According to this example, the detection area is limited by establishing a minimum distance above which the detection modules can take detection measurements and a maximum distance above which all the points placed at a greater distance are not within the detection area, and therefore would not be taken into account in the detection measurements of that position. That is, the representation model (M) includes the detection measurements taken by the detection modules in the area of the circular sector defined as the detection area of the vehicle.

In a particular non-claimed example, *the plurality of detection measurements are taken by the second detection module in a capture volume.*

In this example, the second detection module allows taking the detection measurements in a capture volume, i.e., it is capable of taking, in a given instant, detection measurements for spatial points with different directions and angles that are placed within the capture volume. In a preferred embodiment, the detection measurements of the second detection module give rise to a three-dimensional data structure.

In a particular example, *the advancement of the vehicle, the change in orientation, or both is such that the capture sectors between two successive captures taken by the first module overlap one another.*

In a particular example, *the advancement of the vehicle, the change in orientation, or both is such that the capture volumes between two successive captures taken by the second module overlap one another.*

According to these examples, when a detection module takes a capture and after a movement of the vehicle and/or a change in orientation the detection module takes another capture; the captures overlap one another since they contain detection measurements for common points in both captures.

In a particular non-claimed example, *a change in position and*/*or orientation of the points obtained in the second capture is established between two successive captures such that a better adjustment is obtained between the points of the second capture overlapping the points of the first capture.*

In this example, the overlapping of two consecutive captures having common detection points allows a better adjustment in the representation model of those points which have been detected in both captures but with different orientation and/or distance, i.e., it allows correcting possible deviations with consecutive detection measurements.

In a particular non-claimed example, *the change in position and*/*or orientation of the points obtained in the second capture is used for correcting the calculation to determine the coordinates and orientation of the vehicle.*

In this example, to correct or adjust the position and orientation of the vehicle information about the detection points of the second consecutive capture with respect to the same points detected in the first capture is used.

After a movement or change in orientation of the vehicle, the points obtained in the second capture which would also have been obtained in the first capture should present the change in position or orientation associated with the change. Providing consecutive captures allows detecting errors in the detection measurements by comparing common detection points between consecutive captures knowing the changes in position or orientation that happened between captures.

In a particular embodiment, *the explored region stored in the image of the representation model is established by the merger of the capture sectors on the surface captured by the first module.*

The second region of the image of the representation model, representing the explored region of the surface, is defined by the merger of the different explored areas of the surface in the captures taken by the first detection module.

In a particular embodiment, *the explored region stored in the image of the representation model is increased with the horizontal projection of the capture volumes of the second module.*

In this example, the information of the representation model is enriched with the detection measurements taken by the second detection module. The image comprised in the representation model includes the projection of the capture volume of the second detection module.

In a particular example, *the first module is configured for taking measurements determining the presence of cavities on the surface or the absence of ground.*

Advantageously, the first detection module is capable of detecting anomalies on the exploration surface, i.e., it is capable of detecting the absence of ground, preventing the vehicle from self-destructing, or capable of detecting cavities or anomalies, preventing the vehicle from running aground when it moves, for example.

In another non-claimed embodiment, *the device further comprises infrared sensors configured for detecting the presence of cavities on the surface or the absence of ground.*

In this example, the vehicle of the device comprises infrared sensors for detecting the absence of ground, preventing the vehicle from self-destructing, or for detecting cavities or anomalies, preventing the vehicle from running aground when it moves, for example.

In the invention, *the central processing unit is adapted for exploring sub-domains of the space represented by the representation model and reducing the number of points stored in said sub-domain when the density of points exceeds a specific predetermined threshold value.*

The detection measurements taken by the detection modules are represented in the representation model. In the invention, a threshold is established so that if the density of the detection points represented in the representation model exceeds said threshold, the central processing unit reduces the amount of points. For example, a line is established instead of the cloud of points, eliminating points that are farther away, etc.

In a particular example, *the first detection module is a LIDAR.*

LIDAR is a device which allows detecting the distance to a construction element by means of a laser beam. As a result of the LIDAR placed in the device, the vehicle moves and distance measurements with respect to the construction elements placed on the surface are obtained. The LIDAR obtains a cloud of points which is represented as the second region of the image of the representation model.

In a particular non-claimed example, *the second detection module is a stereo camera.*

The stereo or 3D camera allows taking three-dimensional captures. These cameras allow simulating the depth perception of human vision which is achieved with two cameras separated from one another capturing an image in the same instant. Knowing the distance between the cameras allows calculating the position and distance with respect to the points of the detected physical elements.

In a particular non-claimed example, *the third detection module is a radioactivity meter, or a light meter, or a sound level meter, or a barometer, or any other sensor capable of measuring a property of the environment at a specific spatial point, or a combination of two or more of the foregoing.*

These sensors take one measurement for each position of the vehicle. The measurement the sensor takes concerning a specific property of the environment is stored together with the position of the vehicle at the time it is taken. For example, the sensor may be a light meter which measures, throughout the entire day, the illuminance of the areas through which the vehicle passes.

In a particular example, *the fourth detection module is an ultraviolet, or thermal, or infrared, or multispectral, or hyperspectral image sensor, or a combination of two or more of the foregoing.*

These sensors are image-based area sensors, i.e., they capture in one image a set of measurements of the properties of the environment in an instant. For example, the sensor may capture an ultraviolet image of the environment which can be included in the representation model, increasing the amount of information about the environment that is represented.

In a particular example, *one or more measurements are taken by means of the second module formed by a stereo camera:*
- *generating a disparity image from stereoscopic images, wherein a distance value is made to correspond to each pixel;*
- *establishing, for each pixel, the orientation of the path corresponding to the distance measurement of said pixel according to the configuration of the stereo camera;*
- *determining the spatial coordinates corresponding to the point of the path established by the orientation and spaced from the focus of the camera by a distance determined by the level of disparity.*

The stereo camera allows generating a disparity image in which each pixel of the image has associated therewith the distance and orientation of the path which the stereo camera followed in order to take detection measurements. The disparity image is an image in which the intensity level of each pixel is proportional to the depth or distance of the point it represents with respect to the camera. The position of the pixel in the disparity image also allows calculating the orientation of the visual line from the camera, and therefore allows determining the spatial coordinates of the points shown in said disparity image.

According to one non-claimed embodiment, *the pixels of the disparity image are selected from those which are at a distance smaller than a specific distance.*

In this example, there is a specific pre-established distance determining that the pixels with an associated distance smaller than the established distance are represented in the disparity image, whereas those pixels which are beyond said distance are not represented in the disparity image. The disparity image therefore only shows the pixels representing the spatial points located at a distance from the vehicle smaller than the specific distance.

According to another non-claimed embodiment, *the selected pixels of the disparity image are a subset for reducing the number of spatial points to be stored in the representation model.*

In this example, to reduce the number of pixels of the disparity image which are represented in the representation model, a subset of all the pixels is selected. The selection criterion can be, for example, selecting those having a smaller distance, or those having one and the same orientation. According to another non-claimed embodiment, the selection corresponds to an image sampling such that the cloud of points that become part of the representation model has a smaller amount of information, facilitating the processing thereof.

According to one embodiment, *the vehicle additionally comprises a painting unit in communication with the central processing unit, wherein the central processing unit is configured for activating and deactivating the painting unit, and wherein the method additionally comprises the following sub-steps:*
- *uploading into the storage unit of the vehicle one or more paths to be painted on a region of the image of the representation model;*
- *placing the vehicle on a point of the surface with the painting unit deactivated; and additionally, by means of the central processing unit,*
   *i. establishing a path of movement of the vehicle comprising the at least one path to be painted;*
   *ii. iteratively carrying out the following sub-steps:*
      *sending commands to the control means which act on the drive means to move the vehicle to the beginning of an unpainted path;*
      *sending commands to the control means which act on the drive means to move the vehicle along the unpainted path, keeping the painting unit activated;*
      *sending deactivation commands to the painting unit when the path ends;*
   *as long as there are unpainted paths.*

According to this example, the vehicle further comprises a painting unit which allows painting the surface on which it moves. In this case, the paths to be painted on the surface are stored in the storage unit, and the central processing unit, in communication with the storage unit, is in charge of activating and deactivating the painting unit to only paint the stored painting paths.

The vehicle is placed on the surface and a path of movement comprising at least one path to be painted is established. To carry out the painting paths of the entire surface, the vehicle moves through the drive means, commanded by the control means, towards where a path to be painted begins, the painting unit is then activated and the vehicle moves along the path to be painted painting the surface as it moves. Once the path to be painted has ended, the painting unit is deactivated and the vehicle would move to the beginning of the next path to be painted. This is carried out iteratively until all the stored paths to be painted have been painted.

After receiving the defined paths to be painted, the painting unit allows the vehicle, once the surface has been recognized and the actual arrangement of the structural elements present on the surface is known, to draw markings along the surface on which, for example, walls, slabs, footings, etc., must be constructed.

According to a non-claimed embodiment *the central processing unit is configured for establishing the path of movement of the vehicle section-wise between unpainted paths, such that they prevent collision with objects demarcated or represented in the representation model.*

In this example, a specific path is established between each of the paths to be painted, knowing the arrangement of the different structural elements on the surface, such that the vehicle does not collide with said elements or get caught by anomalies on the surface.

According to one non-claimed embodiment, *the central processing unit is configured for limiting the paths to be painted at least a predetermined distance from structural elements represented in the representation model.*

In this example, the central processing unit controls the vehicle such that it does not approach the construction elements identified in the representation model more than a predetermined distance when it moves on the surface, limiting the paths to be painted close to said elements. The vehicle is therefore prevented from getting closer than it should be to an element and brushing up against it, colliding with it, or causing a failure.

A second inventive aspect provides *a device for generating an at least two-dimensional representation model of structural elements placed on a surface, comprising at least:*
- *a vehicle with drive means and control means adapted for commanding the drive means, wherein said vehicle is adapted for moving over the surface;*
- *a central processing unit and a storage unit in communication with the central processing unit, wherein the central processing unit is at least in communication with the control means;*
- *a first object detection module configured for providing distance measurements and measurement direction with respect to objects at least at an angle in an essentially horizontal plane;*
- *wherein the central processing unit is configured for:*
   *acting on the control means, determining the movement of the vehicle;*
   *receiving detection measurement data from the first detection module;*
   *processing the received data and carrying out reading and writing operations in*
   *the storage unit;*
*wherein the central processing unit is additionally adapted for carrying out steps b) to e) of the method of the invention.*

According to a particular example, *the device further comprises a second object detection module configured for providing distance measurements and distance measurement direction with respect to points of the surface of objects at least comprised in a capture volume,*
*wherein the central processing unit is also configured for receiving detection measurement data from the second detection module.*

According to another particular non--claimed example, *the central processing unit is additionally configured for carrying out the steps of any of the methods according to any of the preceding embodiments.*

According to one non-claimed embodiment, *the device additionally comprises a painting unit in communication with the central processing unit, wherein the central processing unit is configured for activating and deactivating the painting unit, and wherein the central processing unit is adapted for carrying out steps i) and ii) of the method of any of the examples of the painting unit.*

### DESCRIPTION OF THE DRAWINGS

These and other features and advantages of the invention will become more apparent based on the following detailed description of a preferred embodiment given only by way of illustrative and non-limiting example in reference to the attached figures.
- Figure 1: This figure schematically shows an embodiment of a device for generating a representation model of structural elements placed on a surface which allows carrying out a specific mode of the invention.
- Figure 2: This figure shows a schematic example of a representation model comprising an image in which different regions are distinguished.
- Figures 3A to 3C: These figures show a simple example of surface recognition by means of the movement of a vehicle together with the subsequent painting of the surface. Figure 3A shows the physical surface to be recognized, Figure 3B shows a part of the path taken by the vehicle, and Figure 3C shows the result of the lines painted on the surface.
- Figure 4: This figure schematically shows an example of a device for generating a representation model further comprising another detection module and a painting unit which allows carrying out a particular embodiment of the invention.
- Figure 5: This figure shows a schematic example of a representation model comprising a disparity image which is obtained from a stereo camera.
- Figures 6A and 6B: These figures show two schematic examples of an overlapping between the different measurement captures taken by the detection modules of the vehicle.
- Figure 7: This figure shows a schematic example of a type of wheel which the vehicle may have to allow its movement.

### DETAILED DESCRIPTION OF THE INVENTION

According to the first inventive aspect, the present invention relates to a method for generating a representation model (M) of structural elements (E) placed on a surface (S).

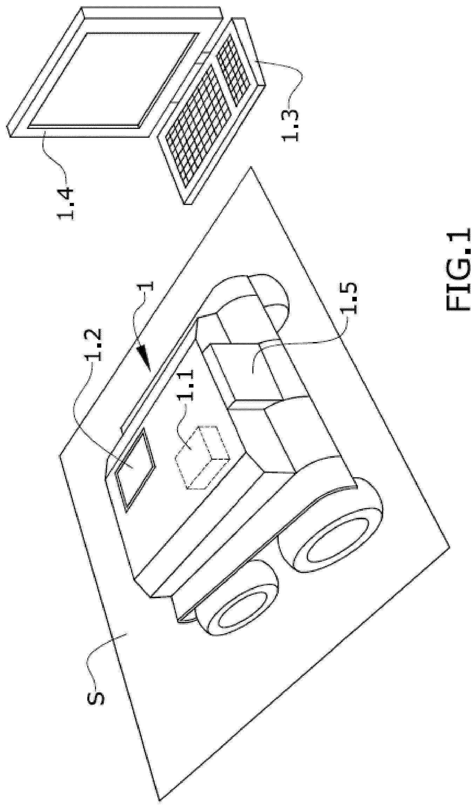

The method uses a device for generating the representation model (M). Figure 1 shows an example of the device for generating a representation model (M) of structural elements (E) placed on a surface (S). This example shows a vehicle (1) with drive means (1.1) and control means (1.2) to allow the movement of the vehicle (1) on the surface (S). The vehicle (1) comprises a detection module (1.5) measuring measurement distances and direction with respect to objects in a horizontal plane. This module allows detecting objects or structural elements (E) which are placed on the surface (S), knowing the direction and distance with respect to said elements.

Figure 1 also shows the central processing unit (1.3) acting on the control means (1.2), determining the movement of the vehicle (1). The detection measurements taken by the detection module (1.5) are sent to the central processing unit (1.3) which is in charge of processing said data and acting on the storage unit (1.4).

In this example, the first detection module (1.5) is a LIDAR. This sensor allows detecting the distance to a structural element (E) by means of a laser beam. As a result of the LIDAR placed in the vehicle (1), distance measurements with respect to the construction elements (E) it detects as being placed on the surface (S) are obtained.

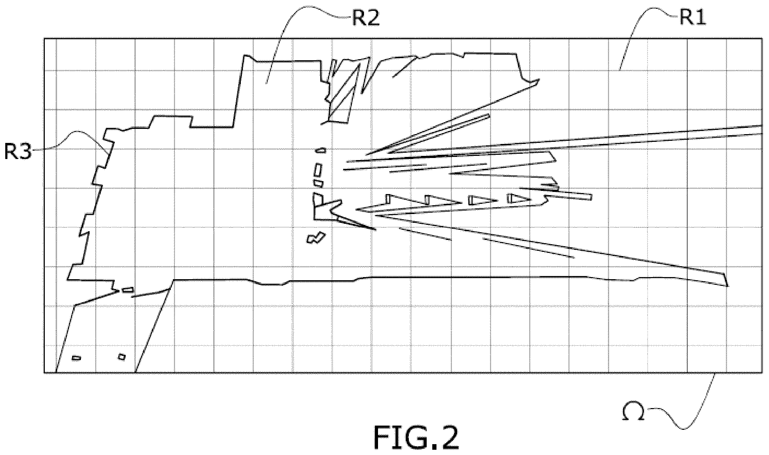

Figure 2 shows a schematic example of a representation model (M) comprising a two-dimensional image (Ω) in which different regions are distinguished. The detection module (1.5) takes measurements along the surface (S) to explore said surface and detect the presence of elements (E).

Different regions can be seen in Figure 2, on one hand, the first region (R1) showing the different points of the surface (S) which have not been explored by the first detection module (1.5), on the other hand, the second region (R2) showing the points which have been explored by the first detection module (1.5), and finally, the third region (R3) showing the points in which the presence of an object or structural element (E) has been detected.

The measurements obtained by the first detection module (1.5) are represented in the image (Ω) as points projected on the surface (S). As seen in Figure 2, when the density of the points representing the detection of structural elements (E) by the first detection module (1.5) is higher than the predetermined threshold, the points are represented as a line in the image (Ω). The lines in the image (Ω) therefore represent the horizontal projection of the structural elements (E) on the surface (S) which the first detection module (1.5) has detected.

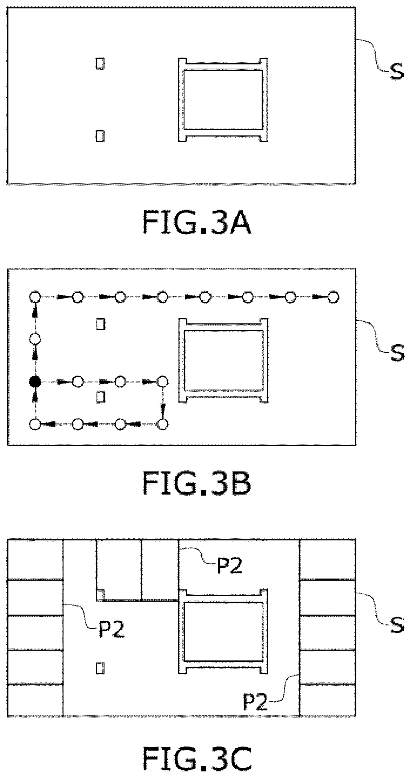

Figures 3A to 3C show a simple example of surface recognition by means of the movement of a vehicle and the taking of different detection measurements, together with the subsequent painting of the surface.

Figure 3A shows a surface (S) with six columns and four partitions between four of them in which the vehicle (1) is positioned. Initially, a coordinate system is established to know the position of the vehicle (1) and the detected elements according to that coordinate system. Figure 3B shows the path that the vehicle (1) follows while it takes detection measurements. The vehicle (1) is initially positioned on the surface (S) in the position indicated with a black circle in Figure 3B and oriented in the direction indicated by the contiguous discontinuous arrow on the right. In that position, the first detection module (1.5) takes detection measurements, determining the coordinates of each point obtained in the measurement, and storing them in the image (Ω) of the representation model (M). Once the different regions in the image (Ω) of the representation model (M) have been determined after the detection measurements, the vehicle moves a specific distance, 3 meters in the example, towards the next position in which it takes new detection measurements.

This process is carried out along the next three positions marked with circles following the direction of the discontinuous arrows to the position in which the vehicle (1) is positioned in front of a partition. In that position, the vehicle (1) takes detection measurements and the first detection module (1.5) detects the presence of a structural element (E). At that time, the path of the vehicle (1) is modified upon detecting the presence of the partition at a distance of less than 3 meters, preventing the vehicle from colliding with the structural element (E). To avoid the element (E), the vehicle turns right, changing the orientation of the vehicle.

The vehicle (1) moves 3 meters to the next position in which it is oriented towards the wall of the surface (S). The first detection module (1.5) takes new detection measurements and detects, in this case, the existence of a new structural element (E), the wall, so after determining the different regions of the image (Ω) of the representation model (M) with the new measurements, the path of the vehicle (1) is again modified and it moves turning again to the right, avoiding the detected structural element (E).

The vehicle (1) keeps moving in the same direction, until the first detection module again detects the presence of a structural element (E), another wall, and the vehicle (1) turns right again, avoiding the wall again and modifying the direction and orientation of the vehicle (1).

The vehicle (1) keeps moving in the same way following the path shown in Figure 3B. The vehicle (1) will keep moving until a stop criterion is met or until the entire surface (S) has been recognized. Once the entire surface (S) has been recognized, Figure 3B would show a path that would have swept the entire surface (S). In a preferred example, the final point of the path is the same as the initial point.

In this example, the device for generating the representation model (M) further comprises a painting unit (1.7) allowing the vehicle (1) to gradually paint the surface (S) as it advances.

Once the recognition of the surface (S) by means of the first detection module (1.5) has ended, knowledge concerning the placement of the different structural elements (E) on the surface (S) is obtained. This is when the vehicle (1) can receive commands for painting different paths on the surface (S), and by knowing the surface (S) and the structural elements (E) placed thereon, it can avoid collision with structural elements (E) and correctly perform painting.

The storage unit (1.4) contains the paths (P2) to be painted on the surface (S) represented in the image (Ω) of the representation model (M). In this example, the lines to be painted correspond with the lines establishing the parking spaces on the surface (S).

To paint the corresponding lines, the vehicle (1) is positioned on the surface (S) with the painting unit (1.7) deactivated. The control means (1.2) move the vehicle (1) to the beginning of an unpainted path (P2) by means of the drive means (1.1). Once there, the central processing unit (1.3) activates the painting unit (1.7) and the vehicle (1) moves over the path painting along same. Once the path ends, the painting unit (1.7) is deactivated and the vehicle (1) moves towards the next path (P2) to be painted. This is repeated until the vehicle (1) has moved over all the paths (P2) to be painted, marking the lines of the parking spaces indicated on the surface (S).

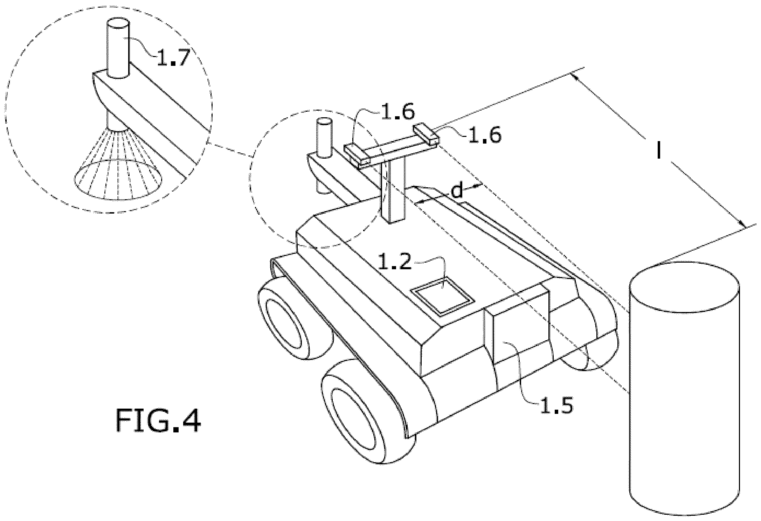

Figure 4 schematically shows an example of a device for generating a representation model (M) further comprising a second detection module (1.6) and a painting unit (1.7) which allows carrying out a particular embodiment of the invention.

The second detection module (1.6) allows providing distance measurements and distance measurement direction with respect to points of the outer surface of objects comprised in the capture volume (V). The detection measurements taken by the second detection module (1.6) are sent to the central processing unit (1.3) which is in charge of processing said data and acting on the storage unit (1.4).

In this example, the spatial points captured by the second detection module (1.6) which correspond to the outer surface of the structural elements (E) placed on the surface (S) are included in the representation model (M), increasing the information of the exploration space.

Like with the first detection module (1.5), the second detection module (1.6) gradually takes iterative detection measurements of the environment and the different unexplored regions (R1), explored regions (R2), and regions with detected elements (R3) are gradually determined and updated.

It can be observed in Figure 4 that, in this example, the second detection module (1.6) is a stereo camera.

The stereo or 3D camera allows taking three-dimensional captures. Figure 4 shows two stereo cameras (1.6) consisting of two attached cameras that are separated by a known distance (d). These cameras allow simulating the depth perception of human vision which is achieved with the two cameras separated from one another capturing an image in the same instant. Knowing the distance (d) between the cameras allows calculating the position and distance with respect to the points of the detected physical elements (E).

To calculate the 3D position of the detected points, the following steps are carried out in the example:
- Mathematically eliminating the radial and tangential distortion caused by the camera lens. The radial and tangential distortion phenomenon caused by the camera lens makes lines, which are straight in the space, look like curved lines in the images taken by the cameras. The distortion elimination process results in readjusted images.
- Adjusting the angles and distances between the cameras. This process is referred to as rectification. It results in rectified images with rows that are aligned.
- Locating the same points of interest in the left and right images of the camera. This process is referred to as correspondence. This process results in the disparities of the points of interest, where disparity means the difference in the x coordinate of a point of interest in the left and right images of the camera: xl - xr.
- By knowing the geometric arrangement of the cameras, the distance (I) of the points of interest can be known using triangulation. This process is referred to as reprojection and the result is the 3D position of the points of interest.

The stereo camera therefore takes a series of measurements, generating a disparity image from stereoscopic images in which each pixel corresponds to a distance value (I). Furthermore, there is established for each pixel the orientation of the path corresponding to the distance measurement in said pixel according to the configuration of the stereo camera. There are determined for each point the spatial coordinates determined by the orientation and spaced from the focus of the camera and the distance determined by the level of disparity.

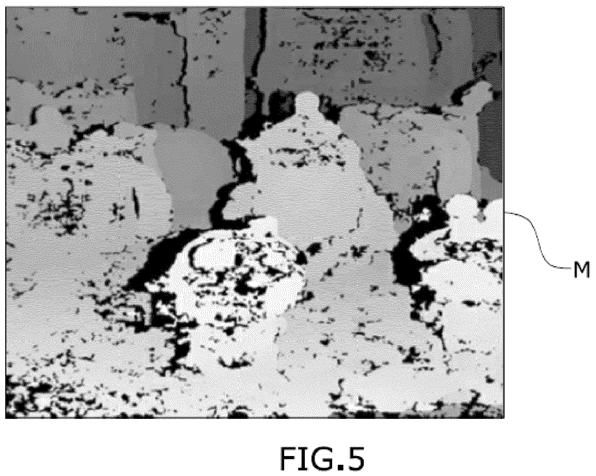

Figure 5 shows an example of a disparity image that the stereo camera generates following the preceding steps as a result of the detection measurements that it takes. This figure shows that the points closer to the camera are in a lighter shade, whereas the points that are farther away are in a darker shade. The points that are close by have a higher disparity and the points that are farther away a lower disparity. Those points located at a distance smaller than a specific distance are therefore represented in the image. Those points placed at a distance greater than said maximum distance are seen in the image in black color and will have a disparity of zero.

In the example of Figure 4, the vehicle (1) furthermore includes a painting unit (1.7) which allows painting the surface (S) on which the vehicle moves when it is in an active mode. The control unit (1.2) receives commands from the central processing unit (1.3), which is in communication with the storage unit (1.4) containing the paths (P2) to be painted on the surface (S), for activating and deactivating the painting unit (1.7) to paint only the stored painting paths (P2).

After the surface (S) has been explored with the detection means (1.5, 1.6), the vehicle (1) moves as a result of the drive means (1.1), commanded by the control means (1.2), towards where a path (P2) to be painted begins, the painting unit (1.7) is then activated and the vehicle (1) moves along the path (P2) to be painted, painting the surface (S) as it moves along. Once the path (P2) to be painted has ended, the painting unit (1.7) is deactivated and the vehicle (1) would move towards the beginning of the next path (P2) to be painted. This is carried out iteratively until all the stored paths (P2) to be painted have been painted.

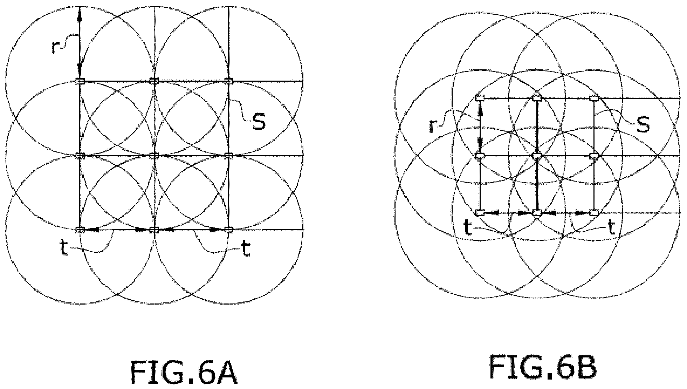

Figures 6A and 6B show two schematic examples of an overlapping between the different measurement captures taken by the detection modules (1.5, 1.6) of the vehicle (1).

The detection modules (1.5, 1.6) can perform the plurality of detections in one and the same position in the coordinate system by means of the rotation of the vehicle (1) according to a complete turn. In a preferred example, the second detection module (1.6) allows taking detection measurements with an angle of 360º.

According to the preceding example, the first detection module (1.5) takes detection captures by means of the rotation of the vehicle (1) and in which the second detection module (1.6) is a stereo camera which allows taking 360º captures.

Along the path of the vehicle (1), due to the movement or change in orientation of the vehicle, the detection modules (1.5, 1.6) take successive captures the sector or capture volume of which overlap one another.

This required overlapping between the detection measurement captures allows a better adjustment of the points that are detected and of the position of the vehicle (1) in the coordinate system.

Figures 6A and 6B show two examples with a different capture distance. Depending on the characteristics of the device and of the detection modules (1.5, 1.6), a specific distance between captures (t), a usable capture distance (r), is defined, and a maximum distance for approaching a detected element (E) is defined to prevent colliding with it upon rotation.

The distance which is established between detection captures is also determined by the required overlapping between captures. The precision characteristics vary according to the detection sensor used.

In a particular example, the second detection module (1.6) measures up to a predetermined usable distance (r), and when this distance is greater, depth error increases. A maximum distance (r) can be defined as a distance above which the detection measurements ignore the information of the points placed at a distance greater than the maximum distance (r). In certain cases, if more information is required to perform an adjustment, said distance (r) can be increased, but the error may increase.

Figure 6A shows an example in which the capture distance that is used (r) has been defined at a distance of 3 meters, i.e., capture data placed less than 3 meters from the device is included in the representation model (M), whereas data placed at a greater distance is ignored. Figure 6A shows the result of taking 9 captures separated 3 meters from one another. In this example, the distance between captures (t) has been defined at 3 meters and the maximum distance that is used (r) is, as indicated, 3 meters.

Figure 6B also defines a distance between captures (t) of 3 meters, but in contrast, a maximum usable capture distance (r) of 4.5 meters is established. By increasing this distance (r), a smaller number of captures is needed for exploring the entire surface (S) although the depth error may increase. Figure 6B shows the 9 captures each at a distance of 3 meters but with a larger capture radius; it can be observed that in the example, information of the entire surface (S) is obtained with only 4 captures.

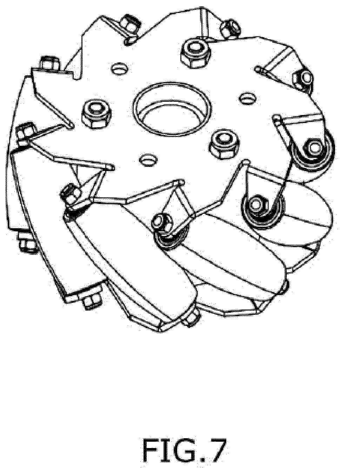

Figure 7 shows a schematic example of a type of wheel, identified as "mecanum" wheels, which the vehicle may have to allow its movement.

By way of example, the vehicle (1) may have four wheels like the one shown in Figure 7, allowing the movement of the vehicle (1) on the surface (S).

These wheels allow the vehicle (1) to move in any direction, allow the vehicle (1) to move perpendicularly, and have the advantage of allowing the vehicle (1) to rotate about itself, allowing the detection modules (1.5, 1.6) to capture detection measurements in a plane of 360º by means of the rotation of the vehicle (1) as a result of the characteristics of these wheels.

When the vehicle (1) is rotated 360º to capture images in the environment, the rotation does not ensure that the final orientation and position of the vehicle (1) is the same as the initial orientation and position mainly due to the friction, which is not always controlled, of the drive elements of the vehicle on the ground. Nevertheless, it has been proven that the use of the wheels shown in Figure 7 ensures a high level of reliability.

## Claims

1. Method for generating a representation model (M) of structural elements (E) placed on a surface (S), wherein the method generates the representation model (M) by means of a device comprising:
- a vehicle (1) with drive means (1.1) and control means (1.2) adapted for commanding the drive means (1.1), wherein said vehicle (1) is adapted for moving over the surface (S);
- a central processing unit (1.3) and a storage unit (1.4) in communication with the central processing unit (1.3), wherein the central processing unit (1.3) is at least in communication with the control means (1.2);
- a first object detection module (1.5) configured for providing distance measurements and measurement direction with respect to objects at least at an angle in an essentially horizontal plane;
- wherein the central processing unit (1.3) is configured for:
acting on the control means (1.2), determining the movement of the vehicle (1);
receiving detection measurement data from the first detection module (1.5);
processing the received data and carrying out reading and writing operations in the storage unit (1.4);
wherein the method comprises the following step:
a) positioning the vehicle (1) on the surface (S);
wherein the method further comprises the following steps performed by means of the central processing unit (1.3):
b)instantiating an at least two-dimensional representation model (M) for representing the surface (S) comprising an image (Ω) with coordinate points of the surface (S), the image (Ω) being adapted for representing at least:
- a first region (R1) corresponding to points of the surface (S) which have not been explored, if there are any,
- a second region (R2) corresponding to points of the surface (S) which have been explored by the first module (1.5), if there are any, and
- a third region (R3) corresponding to points in which there is a captured object, if there are any;
wherein initially the image only contains a first region (R1);
c) determining the position and orientation of the vehicle;
d)iteratively carrying out the following sub-steps:
taking a plurality of detection measurements with the first detection module (1.5), determining the coordinates of each point obtained in the measurement, and storing at least said coordinates of each point in the image (Ω);
determining the region (R2) of the surface (S) which has already been explored and storing it in the image (Ω);
determining the region (R3) of the surface (S) as the region in which an object has been located and storing it in the image (Ω);
moving the vehicle (1) a predetermined distance over a region which corresponds in the image (Ω) to the second region (R2), preventing collision with a structural element (E) through the detection measurements with the first detection module (1.5);
as long as a stop criterion is not met;
e)providing a representation model (M) at least comprising the image (Ω); and
**characterized in that** the central processing unit (1.3) is further adapted for exploring sub-domains of the space represented by the representation model (M) and reducing the number of points stored in said sub-domain when the density of points exceeds a specific predetermined threshold value.

2. Method according to claim 1, wherein the device further comprises a second object detection module (1.6) configured for providing distance measurements and distance measurement direction with respect to points of the surface of objects at least comprised in a capture volume (V), and
wherein the central processing unit (1.3) is furthermore configured for receiving detection measurement data from the second detection module (1.6).

3. Method according to claim 2, wherein the central processing unit (1.3) is configured for:
i. iteratively taking detection measurements or determining region R2 or R3 of the iterative sub-steps of the method of claim 1 based on the detection measurements with the second detection module (1.6), and
ii. storing them in the representation model (M).

4. Method according to any of the preceding claims, wherein the device further comprises a third detection module (1.7) configured for providing measurements of the properties of a specific point of the surface on which the vehicle (1) is located, and wherein the central processing unit (1.3) is furthermore configured for receiving detection measurement data from the third detection module (1.7).

5. Method according to any of the preceding claims, wherein the device further comprises a fourth detection module (1.8) configured for providing measurements of the properties of the environment together with the measurement distance and direction with respect to the points of the environment comprised in a capture volume (V), and
wherein the central processing unit (1.3) is furthermore configured for receiving detection measurement data from the fourth detection module (1.8).

6. Method according to any of the preceding claims, wherein the movement of the vehicle (1) is carried out with section-wise advancements, wherein in each advancement the vehicle (1) is oriented towards an unexplored region of the area (R1) in the image (Ω); or
wherein the movement of the vehicle (1) is carried out with section-wise advancements, wherein in each advancement the vehicle (1) is oriented towards an unexplored region of the area (R1) in the image (Ω), and wherein when reading a measurement of the first detection module (1.5) that is below a predetermined threshold value in the event of the presence of a structural element (E), the path is modified to avoid said structural element (E).

7. Method according to any of the preceding claims, wherein the advancement of the vehicle (1), the change in orientation, or both is such that:
- the capture sectors between two successive captures taken by the first module (1.5) overlap one another; and/or
- the capture volumes (V) between two successive captures taken by the second module (1.6) overlap one another.

8. Method according to any of the preceding claims, wherein the explored region (R2) stored in the image (Ω) of the representation model (M) is established by the merger of the capture sectors on the surface (S) captured by the first module (1.5); and/or wherein the explored region (R2) stored in the image (Ω) of the representation model (M) is increased with the horizontal projection of the capture volumes of the second module (1.6).

9. Method according to any of the preceding claims, wherein the first module (1.5) is configured for taking measurements determining the presence of cavities on the surface (S) or the absence of ground.

10. Method according to any of the preceding claims, wherein the first detection module (1.5) is a LIDAR.

11. Method according to any of the preceding claims, wherein the fourth detection module (1.8) is an ultraviolet, or thermal, or infrared, or multispectral, or hyperspectral image sensor, or a combination of two or more of the foregoing; or
wherein the fourth detection module (1.8) is an ultraviolet, or thermal, or infrared, or multispectral, or hyperspectral image sensor, or a combination of two or more of the foregoing, and wherein one or more measurements are taken by means of the second module (1.6) formed by a stereo camera:
- generating a disparity image from stereoscopic images, wherein a distance value is made to correspond to each pixel;
- establishing, for each pixel, the orientation of the path corresponding to the distance measurement of said pixel according to the configuration of the stereo camera;
- determining the spatial coordinates corresponding to the point of the path established by the orientation and spaced from the focus of the camera by a distance determined by the level of disparity.

12. Method according to any of the preceding claims, wherein the vehicle (1) additionally comprises a painting unit (1.7) in communication with the central processing unit (1.3), wherein the central processing unit (1.3) is configured for activating and deactivating the painting unit (1.7), and wherein the method additionally comprises the following sub-steps:
- uploading into the storage unit (1.4) of the device one or more paths (P2) to be painted on a region of the image (Ω) of the representation model (M);
- placing the vehicle on a point of the surface (S) with the painting unit (1.7) deactivated;
and additionally, by means of the central processing unit (1.3),
i. establishing a path of movement of the vehicle (1) comprising the at least one path (P2) to be painted;
ii. iteratively carrying out the following sub-steps:
sending commands to the control means (1.2) which act on the drive means (1.1) to move the vehicle (1) to the beginning of an unpainted path (P2);
sending commands to the control means (1.2) which act on the drive means (1.1) to move the vehicle (1) along the unpainted path (P2), keeping the painting unit (1.7) activated;
sending deactivation commands to the painting unit (1.7) when the path ends;
as long as there are unpainted paths (P2).

13. Device for generating an at least two-dimensional representation model (M) of structural elements (E) placed on a surface (S), comprising at least:
- a vehicle (1) with drive means (1.1) and control means (1.2) adapted for commanding the drive means (1.1), wherein said vehicle (1) is adapted for moving over the surface (S);
- a central processing unit (1.3) and a storage unit (1.4) in communication with the central processing unit (1.3), wherein the central processing unit (1.3) is at least in communication with the control means (1.2);
- a first object detection module (1.5) configured for providing distance measurements and measurement direction with respect to objects at least at an angle in an essentially horizontal plane;
- wherein the central processing unit (1.3) is configured for:
acting on the control means (1.2), determining the movement of the vehicle (1);
receiving detection measurement data from the first detection module (1.5);
processing the received data and carrying out reading and writing operations in the storage unit (1.4);
wherein the central processing unit (1.3) is additionally adapted for carrying out steps b) to e) of the method of claim 1; and
**characterized in that** the central processing unit (1.3) is further adapted for exploring sub-domains of the space represented by the representation model (M) and reducing the number of points stored in said sub-domain when the density of points exceeds a specific predetermined threshold value.

14. Device according to the preceding claim, wherein the device further comprises a second object detection module (1.6) configured for providing distance measurements and distance measurement direction with respect to points of the surface of objects at least comprised in a capture volume (V),
wherein the central processing unit (1.3) is also configured for receiving detection measurement data from the second detection module (1.6).

15. Device according to any of claims 13 to 14, wherein the device additionally comprises a painting unit (1.7) in communication with the central processing unit (1.3), wherein the central processing unit (1.3) is configured for activating and deactivating the painting unit (1.7), and wherein the central processing unit (1.3) is adapted for carrying out steps i) and ii) of the method of claim 12.

## Patentansprüche

1. Verfahren zur Erzeugung eines Repräsentationsmodells (M) von strukturellen Elementen (E), die auf einer Oberfläche (S) angeordnet sind, wobei das Verfahren das Repräsentationsmodell (M) mittels eines Geräts erzeugt, das umfasst:
- ein Fahrzeug (1) mit Antriebseinrichtungen (1.1) und Steuerungseinrichtungen (1.2), die zum Steuern der Antriebseinrichtungen (1.1) geeignet sind, wobei das Fahrzeug (1) zum Bewegen über die Oberfläche (S) geeignet ist;
- eine zentrale Verarbeitungseinheit (1.3) und eine Speichereinheit (1.4), die mit der zentralen Verarbeitungseinheit (1.3) kommuniziert, wobei die zentrale Verarbeitungseinheit (1.3) zumindest mit den Steuerungseinrichtungen (1.2) kommuniziert;
- ein erstes Objekterkennungsmodul (1.5), das konfiguriert ist, um Distanzmessungen und Messrichtung bezüglich von Objekten zumindest in einem Winkel in einer im wesentlichen horizontalen Ebene bereitzustellen,
- wobei die zentrale Verarbeitungseinheit (1.3) konfiguriert ist, um:
auf die Steuerungseinrichtungen (1.2) zu wirken, die Bewegung des Fahrzeugs (1) zu bestimmen;
Messdaten von dem ersten Erkennungsmodul (1.5) zu empfangen;
Verarbeitung der empfangenen Daten und Durchführung von Lese- und Schreiboperationen in der Speichereinheit (1.4);
wobei das Verfahren die folgenden Schritte umfasst:
a) Positionierung des Fahrzeugs (1) auf der Oberfläche (S);
wobei das Verfahren ferner die folgenden von der zentralen Steuereinheit (1.3) durchgeführten Schritte umfasst:
b) Instanziierung eines mindestens zweidimensionalen repräsentativen Modells (M) zur Darstellung der Oberfläche (S), umfassend ein Bild (Ω) mit Koordinatenpunkten der Oberfläche (S), wobei das Bild (Ω) geeignet ist, zumindest darzustellen:
- eine erste Region (R1), die Punkten der Oberfläche (S) entspricht, die nicht erkundet wurden, sofern vorhanden,
- eine zweite Region (R2), die Punkten der Oberfläche (S) entspricht, die vom ersten Modul (1.5) erkundet wurden, sofern vorhanden, und
- eine dritte Region (R3), die Punkten entspricht, in denen ein erfasstes Objekt vorhanden ist, sofern vorhanden;
wobei das Bild zunächst nur eine erste Region (R1) enthält;
c) Bestimmung der Position und Orientierung des Fahrzeugs;
d) iteratives Durchführen der folgenden Unter-Schritte:
Durchführung einer Vielzahl von Erkennungsmessungen mit dem ersten Erkennungsmodul (1.5), Bestimmung der Koordinaten jedes im Messvorgang erhaltenen Punktes und Speicherung zumindest der Koordinaten jedes Punktes im Bild (Ω);
Bestimmung der Region (R2) der Oberfläche (S), die bereits erkundet wurde, und Speicherung dieser im Bild (Ω);
Bestimmung des Bereichs (R3) der Oberfläche (S) als den Bereich, in dem ein Objekt lokalisiert wurde, und Speicherung in dem Bild (Ω);
Bewegen des Fahrzeugs (1) über eine vordefinierte Strecke über einen Bereich, der im Bild (Ω) dem zweiten Bereich (R2) entspricht, Verhinderung von Kollisionen mit einem strukturellen Element (E) durch die
Erkennungsmessungen mit dem ersten Erkennungsmodul (1.5);
solange ein Stoppkriterium nicht erfüllt ist;
e) Bereitstellung eines Repräsentationsmodells (M), das zumindest das Bild (Ω) umfasst; und
**gekennzeichnet dadurch, dass** die zentrale Verarbeitungseinheit (1.3) zusätzlich angepasst ist, um Teilbereiche des Raums, der durch das Repräsentationsmodell (M) dargestellt wird, zu erkunden und die Anzahl der in diesem Teilbereich gespeicherten Punkte zu reduzieren, wenn die Dichte der Punkte einen bestimmten vordefinierten Schwellenwert überschreitet.

2. Verfahren nach Anspruch 1, wobei die Vorrichtung ferner ein zweites Objekterkennungsmodul (1.6) umfasst, das konfiguriert ist, um Entfernungsmessungen und Entfernungsmessrichtungen in Bezug auf Punkte der Oberfläche von Objekten bereitzustellen, die zumindest in einem Erfassungsvolumen (V) enthalten sind, und
wobei die zentrale Verarbeitungseinheit (1.3) ferner konfiguriert ist, um Erkennungs-Messdaten vom zweiten Erkennungsmodul (1.6) zu empfangen.

3. Verfahren nach Anspruch 2, wobei die zentrale Verarbeitungseinheit (1.3) eingerichtet ist für:
i. das iterative Erfassen von Messungen oder das Bestimmen des Bereichs R2 oder R3 der iterativen Unter-Schritte des Verfahrens nach Anspruch 1 basierend auf den Messungen mit dem zweiten Erkennungmodul (1.6), und
ii. deren Speicherung im Repräsentationsmodell (M).

4. Verfahren gemäß einem der vorhergehenden Ansprüche, wobei das Gerät ferner ein drittes Erkennungsmodul (1.7) umfasst, das konfiguriert ist, um Messungen der Eigenschaften eines bestimmten Punktes der Oberfläche, auf der sich das Fahrzeug (1) befindet, bereitzustellen, und wobei die zentrale Steuereinheit (1.3) zudem konfiguriert ist, um Erkennungs-Messdaten vom dritten Erkennungsmodul (1.7) zu empfangen.

5. Verfahren nach einem der vorhergehenden Ansprüche, wobei das Gerät ferner ein viertes Erkennungsmodul (1.8) umfasst, das konfiguriert ist, um Messungen der Eigenschaften der Umgebung zusammen mit der Messdistanz und -richtung in Bezug auf die Punkte der Umgebung, die sich in einem Erfassungsvolumen (V) befinden, bereitzustellen, und
wobei die zentrale Verarbeitungseinheit (1.3) ferner dafür konfiguriert ist, Erkennungs-Meßdaten vom vierten Erkennungsmodul (1.8) zu empfangen.

6. Verfahren nach einem der vorhergehenden Ansprüche, wobei die Bewegung des Fahrzeugs (1) mit abschnittsweisen Fortschritten durchgeführt wird, wobei in jedem Fortschritt das Fahrzeug (1) auf eine unerforschte Region des Gebiets (R1) im Bild (Ω) ausgerichtet ist; oder
wobei die Bewegung des Fahrzeugs (1) mit abschnittsweisen Fortschritten durchgeführt wird, wobei in jedem Fortschritt das Fahrzeug (1) auf eine unerforschte Region des Gebiets (R1) im Bild (Ω) ausgerichtet ist, und wobei beim Lesen einer Messung des ersten Erkennungsmoduls (1.5), die unter einem vorgegebenen Schwellenwert liegt, im Falle des Vorhandenseins eines Strukturelements (E) der Weg geändert wird, um das genannte Strukturelement (E) zu vermeiden.

7. Verfahren gemäß einem der vorhergehenden Ansprüche, wobei das Vorankommen des Fahrzeugs (1), die Veränderung der Orientierung oder beides so ist, dass:
- die Erfassungssektoren zwischen zwei aufeinanderfolgenden Erfassungen, die vom ersten Modul (1.5) aufgenommen wurden, einander überlappen; und/oder
- die Erfassungsvolumina (V) zwischen zwei aufeinanderfolgenden Erfassungen, die vom zweiten Modul (1.6) aufgenommen wurden, einander überlappen.

8. Verfahren gemäß einem der vorhergehenden Ansprüche, wobei die erkundete Region (R2), die im Bild (Ω) des Repräsentationsmodells (M) gespeichert ist, durch die Fusion der Erfassungssektoren auf der Fläche (S), die von dem ersten Modul (1.5) erfasst wurde, erstellt wird; und/oder wobei die erkundete Region (R2), die im Bild (Ω) des Repräsentationsmodells (M) gespeichert ist, mit der horizontalen Projektion der Erfassungsvolumina des zweiten Moduls (1.6) vergrößert wird.

9. Verfahren gemäß einem der vorhergehenden Ansprüche, wobei das erste Modul (1.5) konfiguriert ist, um Messungen durchzuführen, die das Vorhandensein von Hohlräumen auf der Oberfläche (S) oder das Fehlen von Grund bestimmen.

10. Verfahren nach einem der vorhergehenden Ansprüche, wobei das erste Erkennungsmodul (1.5) ein LIDAR ist.

11. Verfahren nach einem der vorhergehenden Ansprüche, wobei das vierte Erkennungsmodul (1.8) ein Ultraviolett-, Wärme-, Infrarot-, Multispektral- oder Hyperspektralbildsensor ist oder eine Kombination aus zwei oder mehr der vorgenannten; oder
wobei das vierte Erkennungsmodul (1.8) ein Ultraviolett-, Wärme-, Infrarot-, Multispektral- oder Hyperspektralbildsensor ist oder eine Kombination aus zwei oder mehr der vorgenannten, und wobei eine oder mehrere Messungen mittels des zweiten Moduls (1.6) durchgeführt werden, das durch eine Stereo-Kamera gebildet wird:
- Erzeugen eines Disparitätsbildes aus stereoskopischen Bildern, wobei ein Abstandswert jedem Pixel zugeordnet wird;
- Feststellen der Orientierung des Pfades für jedes Pixel, der der Abstandsmessung des genannten Pixels entsprechend der Konfiguration der Stereo-Kamera zugeordnet ist;
- Bestimmung der räumlichen Koordinaten, die dem Punkt des Pfades entsprechen, der durch die Orientierung festgelegt und vom Fokus der Kamera um eine durch das Niveau der Disparität bestimmte Distanz entfernt ist.

12. Verfahren nach einem der vorhergehenden Ansprüche, wobei das Fahrzeug (1) zusätzlich eine Farbgebungsvorrichtung (1.7) umfasst, die mit der zentralen Verarbeitungseinheit (1.3) kommuniziert, wobei die zentrale Verarbeitungseinheit (1.3) so konfiguriert ist, dass sie die Farbgebungsvorrichtung (1.7) aktiviert und deaktiviert, und wobei das Verfahren zusätzlich die folgenden Unter-Schritte umfasst:
- Hochladen eines oder mehrerer Pfade (P2) in die Speichereinheit (1.4) des Geräts, die auf einem Bereich des Bildes (Ω) des Repräsentationsmodells (M) gefärbt werden sollen;
- das Fahrzeug auf einem Punkt der Oberfläche (S) mit deaktivierter Farbgebungseinheit (1.7) zu platzieren;
und zusätzlich, mittels der zentralen Steuereinheit (1.3),
i. einen Bewegungsweg des Fahrzeugs (1) zu bestimmen, der den mindestens einen zu färbenden Pfad (P2) umfasst;
ii. die folgenden Unter Schritte iterativ durchzuführen:
Befehle an die Steuereinheit (1.2) zu senden, die auf die Antriebseinheit (1.1) wirken, um das Fahrzeug (1) zum Beginn eines nicht eingefärbten Pfades (P2) zu bewegen;
Befehle an die Steuereinheit (1.2) zu senden, die auf die Antriebseinheit (1.1) wirken, um das Fahrzeug (1) entlang des nicht eingefärbten Pfades (P2) zu bewegen, während die Farbgebungseinheit (1.7) aktiviert bleibt;
Deaktivierungsbefehle an die Farbgebungseinheit (1.7) zu senden, wenn der Pfad endet;
solange es nicht eingefärbte Pfade (P2) gibt.

13. Vorrichtung zur Erzeugung eines mindestens zweidimensionalen Repräsentationsmodells (M) von auf einer Oberfläche (S) angeordneten Strukturelementen (E), umfassend mindestens:
- ein Fahrzeug (1) mit Antriebseinheiten (1.1) und Steuereinheiten (1.2), die zum Steuern der Antriebseinheiten (1.1) geeignet sind, wobei das Fahrzeug (1) zum Bewegen über die Fläche (S) geeignet ist;
- eine zentrale Verarbeitungseinheit (1.3) und eine Speichereinheit (1.4), die mit der zentralen Verarbeitungseinheit (1.3) kommunizieren, wobei die zentrale Verarbeitungseinheit (1.3) zumindest mit den Steuereinheiten (1.2) kommuniziert;
- ein erstes Objekt-Erkennungsmodul (1.5), das konfiguriert ist, um Distanzmessungen und Messrichtung in Bezug auf Objekte mindestens unter einem Winkel in einer im Wesentlichen horizontalen Ebene bereitzustellen;
- wobei die zentrale Verarbeitungseinheit (1.3) konfiguriert ist für:
das Wirken auf die Steuermittel (1.2), das Bestimmen der Bewegung des Fahrzeugs (1),
das Empfangen von Erkennungs-Messdaten vom ersten Erkennungsmodul (1.5);
das Verarbeiten der empfangenen Daten und das Durchführen von Lese- und Schreibvorgängen im Speicher (1.4);
wobei die zentrale Verarbeitungseinheit (1.3) zusätzlich angepasst ist, um die Schritte b) bis e) des Verfahrens gemäß Anspruch 1 durchzuführen; und
**dadurch gekennzeichnet, dass** die zentrale Verarbeitungseinheit (1.3) weiter angepasst ist, um Unterbereiche des Raums zu erforschen, der durch das Repräsentationsmodell (M) dargestellt wird, und die Anzahl der Punkte, die in dem Unterbereich gespeichert sind, zu reduzieren, wenn die Dichte der Punkte einen bestimmten festgelegten Schwellenwert überschreitet.

14. Vorrichtung gemäß dem vorhergehenden Anspruch, wobei die Vorrichtung ferner ein zweites Objekterkennungsmodul (1.6) umfasst, das konfiguriert ist, um Distanzmessungen und Richtung der Distanzmessung in Bezug auf Punkte der Oberfläche von Objekten, die mindestens in einem Erfassungsvolumen (V) enthalten sind, bereitzustellen, wobei die zentrale Verarbeitungseinheit (1.3) ebenfalls konfiguriert ist, um Erkennungs-Messdaten vom zweiten Erkennungsmodul (1.6) zu empfangen.

15. Vorrichtung gemäß einem der Ansprüche 13 bis 14, wobei die Vorrichtung zusätzlich eine Farbgebungseinheit (1.7) umfasst, die mit der zentralen Verarbeitungseinheit (1.3) kommuniziert, wobei die zentrale Verarbeitungseinheit (1.3) so konfiguriert ist, dass sie die Farbgebungseinheit (1.7) aktivieren und deaktivieren kann, und wobei die zentrale Verarbeitungseinheit (1.3) dafür ausgelegt ist, die Schritte i) und ii) des Verfahrens des Anspruchs 12 auszuführen.

## Revendications

1. Procédé pour générer un modèle de représentation (M) d'éléments structurels (E) placés sur une surface (S), dans lequel le procédé génère le modèle de représentation (M) au moyen d'un dispositif comprenant :
- un véhicule (1) avec des moyens d'entraînement (1.1) et des moyens de commande (1.2) adaptés pour commander les moyens d'entraînement (1.1), dans lequel ledit véhicule (1) est adapté pour se déplacer sur la surface (S),
- une unité de traitement centrale (1.3) et une unité de stockage (1.4) en communication avec l'unité de traitement centrale (1.3), dans lequel l'unité de traitement centrale (1.3) est au moins en communication avec les moyens de commande (1.2),
- un premier module de détection d'objets (1.5) configuré pour fournir des mesures de distance et une direction de mesure par rapport à des objets au moins à un angle dans un plan sensiblement horizontal,
- dans lequel l'unité de traitement centrale (1.3) est configurée pour :
agir sur les moyens de commande (1.2), déterminer le mouvement du véhicule (1),
recevoir des données de mesure de détection provenant du premier module de détection (1.5),
traiter les données reçues et exécuter des opérations de lecture et d'écriture dans l'unité de stockage (1.4),
dans lequel le procédé comprend l'étape suivante :
a) positionner le véhicule (1) sur la surface (S),
dans lequel le procédé comprend en outre les étapes suivantes réalisées au moyen de l'unité de traitement centrale (1.3) :
b) instancier un modèle de représentation au moins bidimensionnel (M) pour représenter la surface (S), comprenant une image (Ω) avec des points de coordonnées de la surface (S), l'image (Ω) étant adaptée pour représenter au moins :
- une première région (R1) correspondant à des points de la surface (S) qui n'ont pas été explorés, s'il y en a,
- une deuxième région (R2) correspondant à des points de la surface (S) qui ont été explorés par le premier module (1.5), s'il y en a, et
- une troisième région (R3) correspondant à des points auxquels il y a un objet capturé, s'il y en a,
dans lequel, initialement, l'image contient uniquement une première région (R1),
c) déterminer la position et l'orientation du véhicule,
d) réaliser de manière itérative les sous-étapes suivantes consistant à :
effectuer une pluralité de mesures de détection avec le premier module de détection (1.5), déterminer les coordonnées de chaque point obtenu dans la mesure, et stocker au moins lesdites coordonnées de chaque point de l'image (Ω),
déterminer la région (R2) de la surface (S) qui a déjà été explorée et la stocker dans l'image (Ω),
déterminer la région (R3) de la surface (S) comme étant la région dans laquelle un objet a été localisé et la stocker dans l'image (Ω),
déplacer le véhicule (1) sur une distance prédéterminée sur une région qui correspond dans l'image (Ω) à la deuxième région (R2), en empêchant une collision avec un élément structurel (E) par les mesures de détection avec le premier module de détection (1.5),
tant qu'un critère d'arrêt n'est pas satisfait ;
e) fournir un modèle de représentation (M) comprenant au moins l'image (Ω), et **caractérisé en ce que** l'unité de traitement centrale (1.3) est en outre adaptée pour explorer des sous-domaines de l'espace représenté par le modèle de représentation (M) et réduire le nombre de points stockés dans ledit sous-domaine lorsque la densité de points dépasse une valeur de seuil prédéterminée spécifique.

2. Procédé selon la revendication 1, dans lequel le dispositif comprend en outre un deuxième module de détection d'objet (1.6) configuré pour fournir des mesures de distance et une direction de mesure de distance par rapport à des points de la surface d'objets au moins compris dans un volume de capture (V), et
dans lequel l'unité de traitement centrale (1.3) est en outre configurée pour recevoir des données de mesure de détection provenant du deuxième module de détection (1.6).

3. Procédé selon la revendication 2, dans lequel l'unité de traitement centrale (1.3) est configurée pour :
i. effectuer de manière itérative des mesures de détection ou déterminer une région R2 ou R3 des sous-étapes itératives du procédé selon la revendication 1 sur la base des mesures de détection avec le deuxième module de détection (1.6), et
ii. les stocker dans le modèle de représentation (M).

4. Procédé selon l'une quelconque des revendications précédentes, dans lequel le dispositif comprend en outre un troisième module de détection (1.7) configuré pour fournir des mesures des propriétés d'un point spécifique de la surface sur laquelle le véhicule (1) est situé, et dans lequel l'unité de traitement centrale (1.3) est en outre configurée pour recevoir des données de mesure de détection du troisième module de détection (1.7).

5. Procédé selon l'une quelconque des revendications précédentes, dans lequel le dispositif comprend en outre un quatrième module de détection (1.8) configuré pour fournir des mesures des propriétés de l'environnement en association avec la distance de mesure et la direction par rapport à des points de l'environnement compris dans un volume de capture (V), et
dans lequel l'unité de traitement centrale (1.3) est en outre configurée pour recevoir des données de mesure de détection provenant du quatrième module de détection (1.8).

6. Procédé selon l'une quelconque des revendications précédentes, dans lequel le déplacement du véhicule (1) est effectué avec des avancées par section, dans lequel, à chaque avancée, le véhicule (1) est orienté vers une région non explorée de la zone (R1) dans l'image (Ω) ; ou
dans lequel le déplacement du véhicule (1) est effectué avec des avancées par section, dans lequel, à chaque avancée, le véhicule (1) est orienté vers une région non explorée de la zone (R1) dans l'image (Ω), et dans lequel lors de la lecture d'une mesure du premier module de détection (1.5) qui est inférieure à une valeur de seuil prédéterminée en cas de présence d'un élément structurel (E), le trajet est modifié pour éviter ledit élément structurel (E).

7. Procédé selon l'une quelconque des revendications précédentes, dans lequel l'avancement du véhicule (1), le changement d'orientation, ou les deux, sont tels que :
- les secteurs de capture entre deux captures successives effectuées par le premier module (1.5) se chevauchent, et/ou
- les volumes de capture (V) entre deux captures successives effectuées par le deuxième module (1.6) se chevauchent.

8. Procédé selon l'une quelconque des revendications précédentes, dans lequel la région explorée (R2) stockée dans l'image (Ω) du modèle de représentation (M) est déterminée par la fusion des secteurs de capture sur la surface (S) capturée par le premier module (1.5), et/ou dans lequel la région explorée (R2) stockée dans l'image (Ω) du modèle de représentation (M) est augmentée avec la projection horizontale des volumes de capture du deuxième module (1.6).

9. Procédé selon l'une quelconque des revendications précédentes, dans lequel le premier module (1.5) est configuré pour effectuer des mesures déterminant la présence de cavités sur la surface (S) ou l'absence de sol.

10. Procédé selon l'une quelconque des revendications précédentes, dans lequel le premier module de détection (1.5) est un LIDAR.

11. Procédé selon l'une quelconque des revendications précédentes, dans lequel le quatrième module de détection (1.8) est un capteur d'image ultraviolet, ou thermique, ou infrarouge, ou multispectral, ou hyperspectral, ou une combinaison de deux capteurs précédents ou plus, ou
dans lequel le quatrième module de détection (1.8) est un capteur d'image ultraviolet, ou thermique, ou infrarouge, ou multispectral ou hyperspectral, ou une combinaison de deux capteurs précédents ou plus, et dans lequel une ou plusieurs mesures sont effectuées au moyen du deuxième module (1.6) formé par une caméra stéréo :
- générer une image de disparité à partir d'images stéréoscopiques, dans lequel une valeur de distance est mise en correspondance avec chaque pixel,
- établir, pour chaque pixel, l'orientation du trajet correspondant à la mesure de distance dudit pixel en fonction de la configuration de la caméra stéréo,
- déterminer les coordonnées spatiales correspondant au point du trajet établi par l'orientation et espacé du point focal de la caméra d'une distance déterminée par le niveau de disparité.

12. Procédé selon l'une quelconque des revendications précédentes, dans lequel le véhicule (1) comprend de plus une unité de peinture (1.7) en communication avec l'unité de traitement centrale (1.3), dans lequel l'unité de traitement centrale (1.3) est configurée pour activer et désactiver l'unité de peinture (1.7), et dans lequel le procédé comprend de plus les sous-étapes suivantes consistant à :
- télécharger dans l'unité de stockage (1.4) du dispositif un ou plusieurs trajets (P2) à peindre sur une région de l'image (Ω) du modèle de représentation (M),
- placer le véhicule sur un point de la surface (S) avec l'unité de peinture (1.7) désactivée,
et, de plus, au moyen de l'unité de traitement centrale (1.3),
i. établir un trajet de déplacement du véhicule (1) comprenant le au moins un trajet (P2) à peindre,
ii. réaliser de manière itérative les sous-étapes suivantes :
envoyer des instructions aux moyens de commande (1.2) qui agissent sur les moyens d'entraînement (1.1) pour déplacer le véhicule (1) jusqu'au début d'un trajet non peint (P2),
envoyer des instructions aux moyens de commande (1.2) qui agissent sur les moyens d'entraînement (1.1) pour déplacer le véhicule (1) le long du trajet non peint (P2), en maintenant l'unité de peinture (1.7) activée,
envoyer des instructions de désactivation à l'unité de peinture (1.7) lorsque le trajet se termine,
tant qu'il y a des trajets non peints (P2).

13. Dispositif pour générer un modèle de représentation au moins bidimensionnel (M) d'éléments structurels (E) placés sur une surface (S), comprenant au moins :
- un véhicule (1) avec des moyens d'entraînement (1.1) et des moyens de commande (1.2) adaptés pour commander les moyens d'entraînement (1.1), dans lequel ledit véhicule (1) est adapté pour se déplacer sur la surface (S),
- une unité de traitement centrale (1.3) et une unité de stockage (1.4) en communication avec l'unité de traitement centrale (1.3), dans lequel l'unité de traitement centrale (1.3) est au moins en communication avec les moyens de commande (1.2),
- un premier module de détection d'objets (1.5) configuré pour fournir des mesures de distance et une direction de mesure par rapport à des objets au moins à un angle dans un plan sensiblement horizontal,
- dans lequel l'unité de traitement centrale (1.3) est configurée pour :
agir sur les moyens de commande (1.2), déterminer le mouvement du véhicule (1),
recevoir des données de mesure de détection provenant du premier module de détection (1.5),
traiter les données reçues et exécuter des opérations de lecture et d'écriture dans l'unité de stockage (1.4),
dans lequel l'unité de traitement centrale (1.3) est de plus adaptée pour réaliser les étapes b) à e) du procédé selon la revendication 1, et
**caractérisé en ce que** l'unité de traitement centrale (1.3) est en outre adaptée pour explorer des sous-domaines de l'espace représenté par le modèle de représentation (M) et réduire le nombre de points stockés dans ledit sous-domaine lorsque la densité de points dépasse une valeur de seuil prédéterminée spécifique.

14. Dispositif selon la revendication précédente, dans lequel le dispositif comprend en outre un deuxième module de détection d'objet (1.6) configuré pour fournir des mesures de distance et une direction de mesure de distance par rapport à des points de la surface d'objets au moins compris dans un volume de capture (V),
dans lequel l'unité de traitement centrale (1.3) est également configurée pour recevoir des données de mesure de détection provenant du deuxième module de détection (1.6).

15. Dispositif selon l'une quelconque des revendications 13 à 14, dans lequel le dispositif comprend de plus une unité de peinture (1.7) en communication avec l'unité de traitement centrale (1.3), dans lequel l'unité de traitement centrale (1.3) est configurée pour activer et désactiver l'unité de peinture (1.7), et dans lequel l'unité de traitement centrale (1.3) est adaptée pour réaliser les étapes i) et ii) du procédé selon la revendication 12.
